# EUROPÄISCHE PATENTANMELDUNG

(11) **EP 1 715 296 A2**
(43) Veröffentlichungstag der Anmeldung: **25.10.2006**
(21) Anmeldenummer: 06112181.0
(22) Anmeldetag: 03.04.2006
(51) Int. Cl.: G01C 21/26

(54) **Verfahren zur Bedienung einer Fahrerinformationseinrichtung**

(30) Priorität: 21.04.2005 DE 102005018439
(71) Anmelder: ROBERT BOSCH GMBH, 70442 Stuttgart (DE)
(72) Erfinder: Hinrichs, Andreas, 31199, Diekholzen (DE); Vogel, Peter, 31139, Hildesheim (DE); May, Thomas, 38302, Wolfenbuettel (DE); Hornburg, Bjoern, 31188, Holle (DE); Yang, Yiwen, 31141, Hildesheim (DE)

(57) **Zusammenfassung**

Es wird ein Verfahren zur Bedienung einer Fahrerinformationseinrichtung vorgeschlagen, bei der ein Nutzerprofil in einer Auswahlbetriebsart durch eine Betätigung wenigstens eines der Bedienelemente der Fahrerinformationseinrichtung eingestellt wird.

Bedienelemente weisen in einer Normalbetriebsart dagegen Funktionen zur Steuerung der Fahrerinformationseinrichtung auf.

## Beschreibung

### Stand der Technik

Die Erfindung geht aus von einem Verfahren zur Bedienung einer Fahrerinformationseinrichtung nach der Gattung des Hauptanspruchs. Es sind bereits Autoradios bekannt, bei denen ein Benutzer vor der Benutzung des Radios einen mehrstelligen Zifferncode eingeben muss, um die Benutzung für ihn zu ermöglichen. Ferner ist es aus dem Bereich der Personal-Computer bekannt, dass ein Benutzer eine Kennung bzw. ein Kennwort eingibt, um sich zu identifizieren. Für die Benutzung des Personal-Computers kann in Abhängigkeit von der Identifikation eine Bildschirmoberfläche entsprechend einem gespeicherten Nutzerprofil eingestellt werden.

Ferner ist es bei Autoradios oder bei Navigationsgeräten im Fahrzeug bekannt, eine Konfiguration des Autoradios bzw. des Navigationsgerätes zu speichern. So können z.B. die Lautstärke einer Audioausgabe, eine Auswahl von Radiosendern oder mögliche Navigationsziele gespeichert werden. Ein Anwender muss dann diese Daten nicht stets neu eingeben, sondern kann auf die gespeicherten Werte zurückgreifen. Üblicherweise werden Fahrerinformationseinrichtungen über Menüebenen sowie Cursor-Steuerungen und Auswahlbefehle gesteuert. Zur Auswahl einer Benutzereinstellung wird hierbei in einem Menü die gewünschte Konfiguration manuell ausgewählt.

Vorteile der Erfindung

Das erfindungsgemäße Verfahren zur Steuerung einer Fahrerinformationseinrichtung hat demgegenüber den Vorteil, dass ein Nutzerprofil für eine Fahrerinformationseinrichtung auf einfache Weise bereitgestellt wird. Dazu wird von der Normalbetriebsart für einen gewissen Zeitraum in eine Auswahlbetriebsart umgeschaltet, in der der herkömmliche Betriebsablauf zur Steuerung der Fahrerinformationseinrichtung außer Kraft gesetzt ist. In der Auswahlbetriebsart wird anschließend lediglich eine Betätigung wenigstens eines der Bedienelemente der Fahrerinformationseinrichtung zur Ermittlung eines Nutzerprofils ausgewertet. In Abhängigkeit von dem betätigten Bedienelement bzw. den betätigten Bedienelementen wird ein Nutzerprofil eingestellt. Eine Eingabe eines Codes bzw. eine Auswahl eines Nutzerprofils über eine Menüauswahl können unterbleiben. Die Auswahl eines Nutzerprofils wird hierdurch vereinfacht. Ein Fahrer kann somit schneller sein Fahrzeug starten und eine Fahrt beginnen, ohne auf seine ihm bekannten, gewünschten Einstellungen verzichten zu müssen. Hierdurch wird ferner vermieden, dass ein Fahrer während der Fahrt komplexe Einstellungen an einer Fahrerinformationseinrichtung vornehmen muss, da auf einfache Weise die ihm bekannten Einstellungen bereitgestellt werden. Für die Auswahl des Nutzerprofils kann zudem auf ein komplexes Auswahlmenü verzichtet werden, da herkömmliche Bedienelemente der Fahrerinformationseinrichtung für die Auswahl des Nutzerprofils verwendet werden. Die Geschwindigkeit einer Bedienung der Fahrerinformationseinrichtung wird somit gesteigert, ein schnellerer Fahrtantritt wird ermöglicht und der Fahrer wird insbesondere gegenüber einer komplexeren Auswahl während der Fahrt erheblich entlastet.

Durch die in den Unteransprüchen aufgeführten Maßnahmen sind vorteilhafte Weiterbildungen und Verbesserungen des im Hauptanspruch angegebenen Verfahrens zur Steuerung einer Fahrerinformationseinrichtung möglich. Besonders vorteilhaft ist es, eine Auswahlbetriebsart zur Auswahl des Nutzerprofils mit oder unmittelbar nach dem Einschalten den Fahrerinformationseinrichtung automatisch zu aktivieren. Eine Aktivierung kann vorteilhaft auch dadurch erfolgen, dass ein Bedienelement vor dem Einschalten oder in einer vorgegebenen Zeitspanne danach gedrückt wird. Hierbei kann der Benutzer die Aktivierung der Auswahlbetriebsart durch einen einfachen Tastendruck anregen. Ein Benutzer kann somit nach dem Start oder sogar mit einer einem entsprechendem Tastendruck während des Startvorgangs ein gewünschtes Nutzerprofil auswählen.

Weiterhin ist es vorteilhaft, die Auswahlbetriebsart zu deaktivieren, nachdem ein Bedienelement betätigt wird oder innerhalb eines vorgegebenen Zeitraums keine Auswahl eines Nutzerprofils erfolgt. Erfolgt keine Auswahl, kann ein Benutzer auf einfache Weise mitteilen, dass er keines der gespeicherten Nutzerprofile verwenden will. Bevorzugt wird dann ein Standard-Nutzerprofil geladen. Hat der Benutzer ein Bedienelement betätigt, dem kein gesondertes Nutzerprofil zugeordnet ist, so wird die Auswahlbetriebsart ebenfalls deaktiviert. Gleiches gilt für den Fall, dass ein Benutzer durch eine Betätigung eines entsprechenden Bedienelements ein Nutzerprofil ausgewählt hat.

Ferner ist es vorteilhaft, die Auswahlbetriebsart dann zu aktivieren, wenn während oder vor dem Einschaltvorgang wenigstens ein Bedienelement der Fahrerinformationseinrichtung gedrückt wird. Somit kann bereits während des Einschaltens der Fahrerinformationseinrichtung das gewünschte Nutzerprofil geladen werden.

Ferner ist es vorteilhaft, Stationstasten insbesondere einer Autoradiofunktion als diejenigen Bedienelemente zu verwenden, die einem Nutzerprofil zugeordnet werden. Diese Bedienelemente sind für einen Verwender leicht unterscheidbar und merkbar.

Weiterhin ist es vorteilhaft, eine Aktivierungstaste vorzusehen, mit der die Auswahlbetriebsart gestartet und/oder beendet werden kann. Insbesondere ist es hierdurch möglich, dass ein Nutzer auch während der Fahrt zu einem gewünschten Nutzerprofil wechseln kann. Dies ist insbesondere dann vorteilhaft, wenn für einen Benutzer mehrere Profile hinterlegt sind. So kann ein Benutzer z.B. ein Profil für Privatfahrten und ein Profil für Geschäftsfahrten ablegen, wobei für beide Nutzerprofile z.B. unterschiedliche Fahrziele gespeichert werden.

Weiterhin ist es vorteilhaft, eine Anzeige vorzusehen, in der die auswählbaren Profile dargestellt werden. Ein Benutzer erhält somit eine Übersicht über die auswählbaren Nutzerprofile. Ebenso ist es vorteilhaft, ein gewähltes Nutzerprofil insbesondere akustisch zu bestätigen. Hierdurch erhält ein Benutzer eine Rückmeldung darüber, ob eine Auswahl erfolgreich durchgeführt wurde.

Weiterhin ist es vorteilhaft, mehrere Profile derart zu kombinieren, dass übereinstimmende Einträge, zumindest aber nicht im Widerspruch zueinander stehende Einträge kombiniert werden. So können z.B. mehrere Telefonlisten verschiedener Profile zu einem gemischten Profil verbunden werden. Auch können z.B. eine Einstellung "Cabrio-Fahrt" und "sportliche Fahrweise" kombiniert werden. Ferner können auch die Musiklisten zweier Passagiere derart kombiniert werden, dass von einer Musikwiedergabefunktion nur in beiden Profilen vorhandene Titel gespielt werden.

### Zeichnung

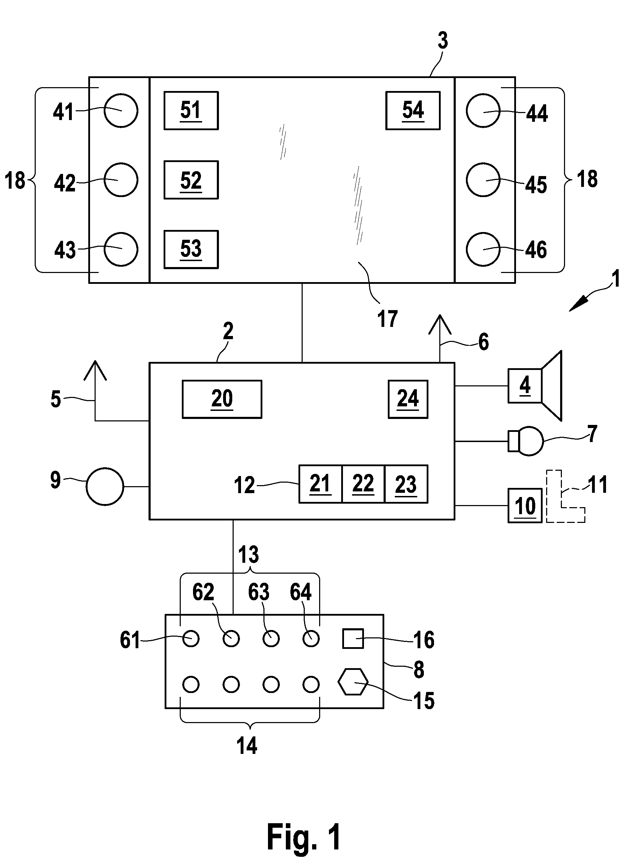

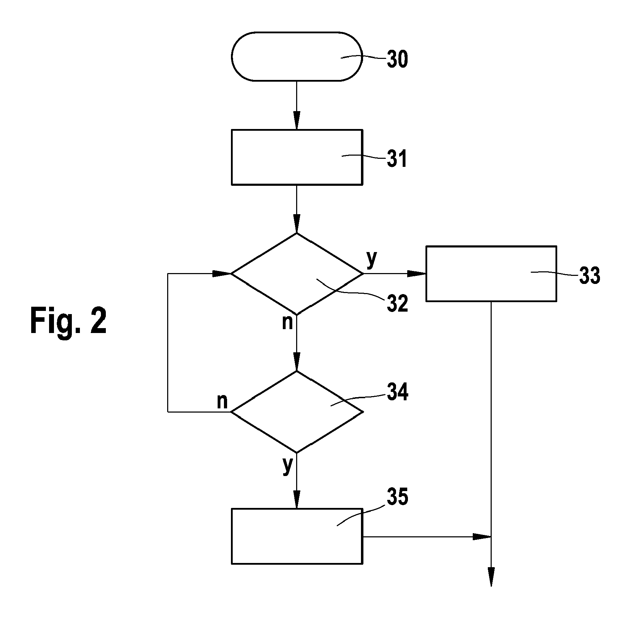

Ausführungsbeispiele der Erfindung sind in der Zeichnung dargestellt und in der nachfolgenden Beschreibung näher erläutert. Es zeigen Figur 1 eine erfindungsgemäße Fahrerinformationseinrichtung, Figur 2 ein erfindungsgemäßes Verfahren zur Steuerung einer Fahrerinformationseinrichtung.

### Beschreibung des Ausführungsbeispiels

Das erfindungsgemäße Verfahren zur Steuerung einer Fahrerinformationseinrichtung kann für beliebige Fahrzeuge verwendet werden, insbesondere für Kraftfahrzeuge. In der Figur 1 ist eine erfindungsgemäße Fahrerinformationseinrichtung 1 dargestellt, bei der an eine Zentraleinheit 2 eine Anzeigeeinheit 3 angeschlossen ist. Die Fahrerinformationseinrichtung 1 ist bevorzugt derart ausgeführt, dass eine Vielzahl von Funktionseinheiten in der Fahrerinformationseinrichtung 1 integriert sind, so z.B. eine Radiofunktion, eine Musikwiedergabefunktion, eine Telefonfunktion, eine Navigationsfunktion und/oder eine Internetfunktion. Ferner können alternativ oder ergänzend auch Stelleinrichtungen im Fahrzeug, wie z.B. eine Klimaregelung oder eine Sitzeinstellung, gesteuert werden. In einer weiteren Ausführungsform kann die Fahrerinformationseinrichtung 1 auch in Form von dezentralen Geräten aufgebaut sein, die bevorzugt über eine Datenbusverbindung miteinander verknüpft sind.

Zur Durchführung der Aufgaben der Fahrerinformationseinrichtung weist die Zentraleinheit 2 eine Recheneinheit 20 auf, die z.B. eine Routenberechnung durchführt, die Anzeigeeinheit 3 ansteuert bzw. eine Audioausgabe über eine Lautsprecher 4 regelt. Die Zentraleinheit 2 ist ferner zur Ortung z.B. mit einer GPS-Antenne 5 verbunden, die eine Satellitenortung für eine Fahrzeugnavigation ermöglicht. Ferner ist in einer Ausführungsform an die Zentraleinheit 2 eine Funkantenne 6 angeschlossen, über die eine Mobilfunkverbindung zu einem Mobilfunknetz, z.B. einem GSM- oder UMTS-Netz, aufgebaut werden kann. Für eine Telefonfunktion ist die Zentraleinheit 2 ferner mit einem Mikrofon 7 verbunden, über das Tonsignale empfangen werden. Eine Audioausgabe des Telefons erfolgt über den Lautsprecher 4. Die Fahrerinformationseinrichtung 1 weist ferner eine Bedieneinheit 8 auf, die bevorzugt ebenso wie die Anzeigeeinheit 3 im Bereich einer Instrumententafel bzw. einer Mittelkonsole des Fahrzeugs angeordnet ist. An die Zentraleinheit 2 ist ferner ein Datenträgerlaufwerk 9 angeschlossen, über das z.B. ein Datenträger mit Navigationsinformation zur Fahrtroutenberechnung oder Musikdaten zur Wiedergabe im Fahrzeug eingelegt werden kann. Ferner kann eine Sitzansteuerung 10 mit der Zentraleinheit 2 verbunden sein, mit der eine Position eines Fahrersitzes 11 regelbar ist.

Zur Steuerung der verschiedenen Funktionen der Fahrerinformationseinrichtung weist die Zentraleinheit 2 einen vorzugsweise nichtflüchtigen Speicher 12 auf, in der verschiedene Profile 21, 22, 23 für den Betrieb der Fahrerinformationseinrichtung 1 abgelegt sind. Ein derartiges Profil kann dabei z.B. die folgenden Informationen umfassen:

Gewählte Radiosender, Play-Listen von Musikstücken, Adressen, zuletzt angefahrene Fahrziele, Sitzeinstellung, Telefonnummern, hervorgehobene Fahrziele, sogenannte "points of interest", Routeninformationen, Konfigurationseinstellungen, zurückgelegte Fahrstrecke und/oder ein gewünschtes Bedienmenü, auf dem besonders beliebte Funktionen des jeweiligen Nutzers abgelegt sind. Ein derartiges Bedienmenü könnte z.B. nutzerabhängig Funktionen der Musikwiedergabe, zuvor ausgewählte Radiosender oder bestimmte Funktionen der Navigationseinrichtung umfassen, z.B. ausgewählte Fahrziele.

In einer ersten Ausführungsform sind die Nutzerprofile 21, 22, 23 hierbei unterschiedlichen Personen, die das Fahrzeug nutzen, zugeordnet. In einer weiteren Ausführungsform können aber auch für einen Nutzer mehrere Profile hinterlegt werden. Damit kann z.B. zwischen Einstellungen für eine geschäftliche Nutzung und für eine private Nutzung des Fahrzeugs unterschieden werden.

Die Nutzerprofile können insbesondere über eine Betätigung der Fahrerinformationseinrichtung 1 von einem Benutzer gespeichert werden, z.B. über einen in einem Menü oder über eine gesonderte Taste aufrufbaren Befehl, die aktuelle Einstellung zu speichern, bzw. ein gespeichertes Nutzerprofil zu aktualisieren. Aktualisierte Daten werden entweder über Nutzereingaben und eine Auswertung des Nutzerverhaltens oder über von einem externen Rechner übertragenen Daten zur Verfiigung gestellt.

Bei einer Aktualisierung werden z.B. die bisherigen gespeicherten letzten angefahrenen Fahrziele gegebenenfalls durch neue, zuletzt angefahrene Fahrziele ersetzt. Sind Anrufe von Telefonanschlüssen eingegangen, deren Nummern bisher nicht gespeichert wurden, so werden diese Nummern z.B. den bisherigen, gespeicherten Nummern hinzugefügt. Bei der Speicherung wird einem Nutzerprofil ein Bedienelement zum späteren Aufrufen des Nutzerprofils entweder durch den Benutzer selbst oder durch die Recheneinheit 20 automatisch zugewiesen.

Eine Steuerung der Fahrerinformationseinrichtung 1 erfolgt in einer ersten Ausführungsform über die Bedieneinheit 8, die z.B. eine erste Gruppe von Bedienelementen 13 und eine zweite Gruppe von Bedienelementen 14 aufweist. Ferner kann auch ein Schaltelement 15 zum Ein- und Ausschalten der Fahrerinformationseinrichtung 1 vorgesehen sein. In einer weiteren Ausführungsform kann auch eine Auswahltaste 16 vorgesehen sein, mit der aus einer Normalbetriebsart in eine Auswahlbetriebsart geschaltet werden kann und umgekehrt. In einer weiteren Ausführungsform können auch an der Anzeigeeinheit 3 benachbart zu einer Anzeigefläche 17 Bedienelemente 18 angeordnet sein. In der Normalbetriebsart sind den Bedienelementen 13, 14, 18 Steuerungsfunktionen für die Fahrerinformationseinrichtung 1 zugeordnet. Den einzelnen Bedienelementen ist dabei eine Funktion derart zugewiesen, dass bei einer Betätigung einer der Bedienelemente die den Bedienelementen zugewiesene Funktion ausgeführt wird. Diese Funktionen beziehen sich auf die Steuerung der Fahrerinformationseinrichtung 1 und bezeichnen z.B. ein Einstellen eines Senders, eine Eingabe eines Fahrziels oder einen Aufbau einer Telefonverbindung. Ferner ist es auch möglich, dass je nach Betriebszustand der Fahrerinformationseinrichtung 1 den Bedienelementen in der Normalbetriebsart teilweise keine Funktion zugeordnet ist.

Im Folgenden ist der erfindungsgemäße Verfahrensablauf zur Steuerung der Fahrerinformationseinrichtung und zur Auswahl des jeweiligen Nutzerprofils anhand der Figur 2 erläutert. Ausgehend von einem Initialisierungsschritt 30, z.B. nach einem Einschalten der Fahrerinformationseinrichtung 1 oder bei einer entsprechenden Betätigung eines Bedienelements, wird in einem Umschaltschritt 31 aus dem Normalbetrieb in die Auswahlbetriebsart umgeschaltet. Diese Umschaltung kann durch verschiedene Ereignisse ausgelöst werden:

In einer ersten Ausführungsform ist hierfür eine Betätigung der Auswahltaste 16 erforderlich. Durch ein Drücken oder ein Gedrückthalten der Auswahltaste 16 wird die Fahrerinformationseinrichtung aus der Normalbetriebsart in die Auswahlbetriebsart umgeschaltet. In einer weiteren Ausführungsform kann auch, nachdem ein Einschalten der Fahrerinformationseinrichtung 1 mit dem Schaltelement 15 erfolgt ist, die Fahrerinformationseinrichtung 1 automatisch für einen bestimmten Zeitraum in die Auswahlbetriebsart geschaltet werden. Ferner kann auch, sofern die Fahrerinformationseinrichtung z.B. mit dem Starten eines Fahrzeugmotors automatisch gestartet wird, durch das Starten des Fahrzeugs und die damit verbundene automatische Aktivierung der Fahrerinformationseinrichtung aus der Normalbetriebsart in die Auswahlbetriebsart umgeschaltet werden. Ferner ist es auch möglich, dass durch einen Benutzer eines der Bedienelemente in den Gruppen 13, 14, 18 gedrückt wird und bei einem nachfolgenden Einschalten, sei es durch eine Betätigung des Schaltelements 15 oder durch ein Starten des Motors, durch die Betätigung eines der Bedienelemente automatisch aus der Normalbetriebsart in die Auswahlbetriebsart umgeschaltet wird.

In der Auswahlbetriebsart sind die normalen Funktionen der Bedienelemente 13, 14, 18 bevorzugt gesperrt. Eine normale, den Bedienelementen ansonsten zugewiesene Funktion, kann daher dann erst nach einer Rückkehr in die Normalbetriebsart wieder ausgeführt werden.

In der Auswahlbetriebsart wird nun in einem ersten Prüfschritt 32 überprüft, ob ein Bedienelement betätigt wurde oder wird, das einem Nutzerprofil zugeordnet ist. In einer ersten Ausführungsform kann z.B. einem ersten Nutzerprofil 21 eine erste Taste 41 neben der Anzeigefläche 17 zugeordnet sein. In einem Ausführungsbeispiel wird eine Erläuterung benachbart zu der ersten Taste 41 in einem Anzeigefeld 51 dargestellt. Entsprechend kann dem zweiten Nutzerprofil 22 die zweite Taste 42 und ein zweites Anzeigefeld 52 zugeordnet sein sowie dem dritten Nutzerprofil 23 eine dritte Taste 43 mit einem dritten Anzeigefeld 53 zugewiesen ist. In einer weiteren Ausführungsform kann einem Benutzer in der Anzeige auch ein Standardprofil 24 zur Auswahl angegeben werden, das in einem weiteren Speicherbereich in der Zentraleinheit 2 abgelegt ist. Dieses Standardprofil kann über eine vierte Taste 54 mit einer entsprechenden Erläuterung 54 ausgewählt werden. In einer weiteren Ausführungsform können die Tasten 41, 42, 43, 44 auch als Touch-Screen-Auswahlfelder in der Anzeigefläche 17 realisiert werden.

In einer weiteren Ausführungsform kann auch eine der Tasten 61, 62, 63, 64 in der ersten Gruppe der Bedienelemente 13 der Bedieneinheit 8 betätigt werden. Eine erste Taste 61 ist hierbei dem ersten Speicherbereich und dem darin abgelegten ersten Nutzerprofil 21, die zweite Taste 62 dem zweiten Profil 22, die dritte Taste 63 dem dritten Profil 23 und die vierte Taste dem Standardprofil 24 zugeordnet. Den Tasten innerhalb der zweiten Gruppe von Bedienelementen 14 sind keine Nutzerprofile zugeordnet. Dies gilt ebenso für eine fünfte Taste 45 und eine sechste Taste 46 einer Tastenanordnung im Bereich der Anzeigeeinheit 3. Insbesondere ist in diesem Ausführungsbeispiel, aber auch in der zuerst genannten Ausführungsform, eine Auswahl eines Nutzerprofils nicht notwendig mit einer Anzeige der auswählbaren Nutzerprofile verbunden. Es ist auch möglich, dass die Nutzerprofile nicht zur Auswahl angezeigt werden, sondern dass dem Benutzer aus einer vorherigen von ihm vorgenommenen Einstellung bekannt ist, welches Bedienelement er zur Auswahl des gewünschten Nutzerprofils betätigen muss. Die genannten Bedientasten 13, 18 können als beliebige Auswahltasten, insbesondere als Drucktasten, ausgeführt sein. In der Normalbetriebsart erfüllen sie z.B. die Funktion einer Stationstastenauswahl. In einer besonderen Ausführungsform kann über den Lautsprecher 4 eine kurze, akustische Rückmeldung über die Auswahl eines entsprechenden Nutzerprofils gegeben werden.

Kann durch eine entsprechende Betätigung eines Bedienelements ein Nutzerprofil eindeutig identifiziert werden, so wird zu dem Einstellschritt 33 weiterverzweigt. In dem Einstellschritt 33 wird das in dem Speicher 12 abgelegte, zugeordnete Nutzerprofil bzw. das Standardprofil 24 ausgelesen und von der Recheneinheit 20 verarbeitet. Entsprechend dem auszulesenden Nutzerprofil wird die Fahrerinformationseinrichtung 1 konfiguriert. Nach der Auswahl des Nutzerprofils wird die Fahrerinformationseinrichtung 1 automatisch in die Normalbetriebsart zurückgeschaltet. In herkömmlicher Weise kann nun ein Benutzer die Bedienung der Fahrerinformationseinrichtung 1 fortführen. Die Fahrerinformationseinrichtung 1 ist aber nunmehr entsprechend seinem Nutzerprofil eingestellt. Gegebenfalls wird z.B. in der Anzeigeeinheit 3 eine Auswahl von Funktionen gemäß dem jeweils gewählten Nutzerprofil dargestellt. Wird im Anschluss in der Normalbetriebsart einer dieser Funktionen ausgewählt, so kann die Fahrerinformationseinrichtung 1 auf die entsprechenden Daten des Nutzerprofils zugreifen, wie z.B. bevorzugte Navigationsziele, eine Telefonnummernliste oder häufig angewählte Internetadressen.

Wird in dem ersten Prüfschritt 32 keine Tastenbetätigung eines Bedienelementes festgestellt, das einem Nutzerprofil zugeordnet ist, so wird zu einem zweiten Prüfschritt 34 verzweigt. In dem zweiten Prüfschritt 34 wird überprüft, ob eine vorgegebene Zeitspanne, z.B. 5s, verstrichen sind. Ist die vorgegebene Zeitspanne verstrichen, so wird zu einem Standard-Einstellschritt 35 verzweigt, in dem das Standardprofil 24 der Fahrerinformationseinrichtung eingestellt wird. Zu dem Standard-Einstellschritt 35 wird in einer Ausführungsform auch dann verzweigt, wenn eine der Tasten betätigt wurde, denen kein Nutzerprofil zugeordnet ist. Dies können z.B. die Tasten 45, 46 oder die Tasten in der zweiten Gruppe von Bedienelementen Bereich 14 sein. Außerdem kann über eine gesondert zugewiesene Ausschaltetaste für die Auswahlbetriebsart zu dem Standard-Einstellschritt 35 verzweigt werden. Dies kann z.B. die Auswahltaste 16 sein, falls über diese Taste ein Aktivieren und Deaktivieren der Auswahlbetriebsart vorgenommen wird. Nach der Einstellung des Standard-Profils wird die Fahrerinformationseinrichtung 1 ebenfalls aus der Auswahlbetriebsart in eine Normalbetriebsart zurückverzweigt. Ist eine derartige Tastenbetätigung jedoch nicht detektiert worden und ist die vorgegebene Zeitspanne auch noch nicht verstrichen, so wird zunächst von dem zweiten Prüfschritt 34 zu dem ersten Prüfschritt 32 zurückverzweigt

In einer weiteren Ausführungsform wird bei einer Betätigung einer der Tasten, die einem Nutzerprofil zugeordnet sind, ein Nutzerprofil nur dann eingestellt, wenn vorher, zeitgleich oder zumindest zeitnah die Auswahltaste 16 zur Bestätigung der Auswahl betätigt wurde. Ferner kann in einer weiteren Ausführungsform eine Benutzerprofilauswahl auch erst dann als gültig angesehen werden, wenn das entsprechende Bedienelement innerhalb eines vorgegebenen Zeitabstandes, z.B. 0,5s, zweimal hintereinander betätigt wurde.

In einer weiteren Ausführungsform ist es auch möglich, dass zwei Bedienelemente, die Benutzerprofilen zugeordnet sind, zeitgleich betätigt werden. In diesem Fall können die beiden Benutzerprofile in der Weise kombiniert werden, dass übereinstimmende und/oder nicht im Widerspruch zueinander stehende Einstellungen beider Profile eingestellt werden. Ferner werden kombinierbare Einstellungen beider Nutzerprofile, z.B. Zusammenstellungen von Fahrziele, Adressdaten und/oder Telefonnummern, aus beiden Nutzerprofilen kombiniert übernommen, so dass die Daten aus beiden Nutzerprofilen für einen weiteren Betrieb der Fahrerinformationseinrichtung 1 zur Verfügung stehen.

## Patentansprüche

1. Verfahren zur Bedienung einer Fahrerinformationseinrichtung, wobei Bedienelementen der Fahrerinformationsvorrichtung in einer Normalbetriebsart Steuerungsfunktionen für die Fahrerinformationsvorrichtung zugewiesen sind und wobei in einer Auswahlbetriebsart durch wenigstens eine Betätigung wenigstens eines der Bedienelemente ein Nutzerprofil der Fahrerinformationseinrichtung ausgewählt wird.

2. Verfahren nach Anspruch 1, **dadurch gekennzeichnet, dass** die Auswahlbetriebsart mit oder unmittelbar nach einem Einschalten der Fahrerinformationseinrichtung automatisch aktiviert wird.

3. Verfahren nach Anspruch 1, **dadurch gekennzeichnet, dass** die Auswahlbetriebsart dann aktiviert wird, wenn vor einem Einschalten der Fahrerinformationsvorrichtung wenigstens eines der Bedienelemente betätigt wurde oder wenigstens eine Betätigung mit dem Einschalten oder in einem festgelegten Zeitraum nach dem Einschalten stattgefunden hat.

4. Verfahren nach einem der vorherigen Ansprüche, **dadurch gekennzeichnet, dass** mit einer ersten Betätigung eines Bedienelements oder mehrerer Bedienelemente bei gleichzeitiger Betätigung während der Auswahlbetriebsart ein Nutzerprofil ausgewählt wird.

5. Verfahren nach einem der vorherigen Ansprüche, **dadurch gekennzeichnet, dass** die Auswahlbetriebsart nach wenigstens einem Betätigen eines der Bedienelemente deaktiviert wird.

6. Verfahren nach einem der vorherigen Ansprüche, **dadurch gekennzeichnet, dass** die Auswahlbetriebsart nach einer Auswahl eines Profils automatisch deaktiviert wird.

7. Verfahren nach einem der vorherigen Ansprüche, **dadurch gekennzeichnet, dass** bei einer gleichzeitigen oder nachfolgender Betätigung von zwei oder mehr Bedienelementen, denen jeweils unterschiedliche Benutzerprofile zugeordnet sind, die unterschiedlichen Benutzerprofile in der Weise kombiniert werden, dass übereinstimmende und/oder nicht im Widerspruch zueinander stehende Einstellungen beider Profile eingestellt werden.

8. Fahrerinformationseinrichtung mit einer Speichereinheit (12) zur Speicherung von Nutzerprofilen (21, 22, 23), mit Bedienelementen (13, 18) zum Aufrufen von Funktionen der Fahrerinformationseinrichtung in einer Normalbetriebsart, wobei eine Bedienung wenigstens eines Bedienelements (13, 18) in einer Auswahlbetriebsart derart ausgewertet wird, dass in Abhängigkeit von der Bedienung des wenigstens einen Bedienelements eines der gespeicherten Nutzerprofile (21, 22, 23) für einen weiteren Betrieb der Fahrerinformationseinrichtung (1) ausgewählt wird.

9. Fahrerinformationseinrichtung nach Anspruch 8, **dadurch gekennzeichnet, dass** die Bedienelemente (13,14, 18) Stationstasten zur Senderauswahl eines Radiosenders sind.

10. Fahrerinformationseinrichtung nach einem der Ansprüche 8-9, **gekennzeichnet durch** wenigstens ein Bedienelement (14, 44) zur Auswahl eines Standardprofils (24).

11. Fahrerinformationseinrichtung nach einem der Ansprüche 8-10, **gekennzeichnet durch** eine Taste (16) zur Aktivierung und/oder Deaktivierung der Auswahlbetriebsart.

12. Fahrerinformationseinrichtung nach einem der Ansprüche 8-11, **gekennzeichnet durch** eine Anzeige (3) zur Darstellung auswählbarer Nutzerprofile.

13. Fahrerinformationseinrichtung nach einem der Ansprüche 8-12, **gekennzeichnet durch** eine akustische Ausgabeeinheit (4) zur Bestätigung einer Auswahl eines der Nutzerprofile (21,22,23,24).
